# EUROPÄISCHE PATENTSCHRIFT

(11) **EP 4 015 339 B1**
(45) Veröffentlichungstag und Bekanntmachung des Hinweises auf die Patenterteilung: **19.02.2025**
(21) Anmeldenummer: 21216440.4
(22) Anmeldetag: 21.12.2021
(51) Int. Cl.: B61D 17/08, B61D 17/04

(54) **WAGENKASTENELEMENT FÜR EINEN WAGENKASTEN EINES SCHIENENFAHRZEUGES**
CAR BODY ELEMENT FOR A CAR BODY OF A RAILWAY VEHICLE
ÉLÉMENT DE CAISSE DE WAGON POUR UNE CAISSE DE WAGON D'UN VÉHICULE FERROVIAIRE

(30) Priorität: 21.12.2020 DE 102020134470
(43) Veröffentlichungstag der Anmeldung: 22.06.2022
(73) Patentinhaber: ALSTOM Holdings, 93400 Saint-Ouen-sur-Seine (FR)
(72) Erfinder: Uschmann, Sven, 39104 Magdeburg (DE)
(74) Vertreter: Zimmermann & Partner Patentanwälte mbB

(56) Entgegenhaltungen:
- EP-A1- 2 704 938
- EP-A1- 3 798 079
- EP-A1- 3 798 080
- DE-A1- 102018 129 470

## Beschreibung

Die Erfindung betrifft ein Wagenkastenelement für den Wagenkasten eines Schienenfahrzeuges, mit einer Stützstruktur und wenigstens einem Hüllelement, sowie einen Wagenkasten und ein Verfahren zur Herstellung eines Wagenkastenelementes.

Der Wagenkasten eines Schienenfahrzeuges bildet die tragende Struktur zur Befestigung sämtlicher Komponenten des Fahrzeuges und zugleich die Außenhülle des Passagierraumes. Wagenkästen werden üblicherweise aus Stahl oder Aluminium hergestellt. Bei der Herstellung von Wagenkästen aus Stahl werden tragende Strukturen erstellt, z.B. durch Nieten oder Schweißen. Die tragenden Strukturen werden von Längsträgern, Querträgern und Säulen gebildet. Die tragenden Strukturen bestehen üblicherweise aus Halbzeugen, wie zum Beispiel U-, Z-, L- oder T-Profilen. Zur Bildung der Hülle des Wagenkastens werden Hüllelemente auf die tragende Struktur aufgebracht bzw. die tragende Struktur wird mit Hüllelementen beplankt. Auch die Hüllelemente haben eine aussteifende bzw. eine die tragende Struktur verstärkende Funktion. Die Hüllelemente bestehen zumeist aus Blechen, die mit der tragenden Struktur verschweißt werden. Derartige Wagenkästen sind in der DE 195 28 610 C1, in der EP 2 555 957 A1 und in der DE 10 2008 048 083 A1 beschrieben. Außerdem beschreibt die nachveröffentlichte EP 3 798 079 A1 ein Wagenkastenelement für den Wagenkasten eines Schienenfahrzeuges, mit einer Stützstruktur und wenigstens einem Hüllelement, wobei die Stützstruktur additiv auf das Hüllelement aufgebracht ist.

Um den Wagenkasten mit Fenstern zu versehen, können in die Hülle des Wagenkastens Ausschnitte eingebracht werden, die zum Beispiel der Montage von Fenstern oder Türen dienen. Weil üblicherweise auch die Hülle eines Wagenkastens eine tragende Funktion aufweist, können im Bereich dieser Ausschnitte während des Betriebes des Schienenfahrzeuges erhöhte Kräfte bzw. Spannungen auftreten. So werden unter anderem über die Kupplung sowie über die Drehgestelle des Schienenfahrzeuges, zum Beispiel wenn der Wagen beschleunigt oder abgebremst wird oder in eine Kurve hineinfährt, Biege- und Torsionsmomente in den Wagenkasten eingeleitet, die sich über die Hülle bis zu den Ausschnitten fortsetzen. Diese Belastungen führen in der Wagenkastenwand zu Zug- oder Druckspannungen, die sich vor allem an Ecken der Ausschnitte konzentrieren und diese stauchen oder dehnen können. Um erhöhten Belastungen in der Wagenkastenwand zu begegnen, wird die tragende Struktur im Bereich der erhöhten Belastungen verstärkt, zum Beispiel durch eine Vergrößerung der Blechdicke oder durch zusätzliche Träger oder Rippen.

In der DE 10 2008 048 083 A1 wird vorgeschlagen, die Hülle des Wagenkastens aus Blechteilen mit unterschiedlichen Dicken zu fertigen. Auf diese Weise können in Bereichen, die einer geringeren Belastung ausgesetzt sind, geringere Blechstärken verwendet und Gewicht und Material eingespart werden.

In der EP 2 555 957 A1 wird eine Wagenkastenwand mit einer Hülle aus Blechen mit unterschiedlichen Eigenschaften beschrieben. Die Bleche grenzen stumpfstoßend aneinander an und sind zur Bildung einer versatzfreien Außenseite über durchgehende Laserschweißnähte miteinander verbunden. An Bereichen der Außenbeblechung, an denen erhöhte Spannungen auftreten, werden zum Beispiel Bleche mit größeren Wandstärken verwendet.

Nachteile der Außenwände bekannter Wagenkästen sind der verhältnismäßig hohe Fertigungsaufwand, der durch das Anfertigen passender Blechteile und die erforderlichen Schweißarbeiten entsteht, sowie das weiterhin hohe Gewicht der Wagenkästen.

Der Erfindung liegt daher die Aufgabe zu Grunde, einen Wagenkasten bereitzustellen, der bei einer hohen Festigkeit ein geringes Gewicht aufweist und einfach zu fertigen ist.

Diese Aufgabe wird erfindungsgemäß mit einem Wagenkastenelement nach Anspruch 1, einem Wagenkasten nach Anspruch 13 sowie ein Verfahren zur Herstellung eines Wagenkastenelementes nach Anspruch 14 gelöst.

Gemäß der Erfindung ist vorgesehen, dass die Stützstruktur in einem ersten Abschnitt additiv auf das Hüllelement aufgebracht ist, d.h. in einem 3-D-Druckverfahren aufgedruckt ist. Dabei ist die Stützstruktur in dem ersten Abschnitt bevorzugt vollständig durch das 3-D-Druckverfahren erstellt. Die Begriffe "Additive Fertigung" und "3-D-Druck" sind im Folgenden als gleichbedeutende Synonyme zu verstehen.

Das verwendete 3-D-Druckverfahren umfasst bevorzugt Auftragsschweißen, insbesondere additiv-generatives Laser-Pulver-Auftragsschweißen (LPA) oder Laser-Schweißdraht-Auftragsschweißen. Indem die Stützstruktur in dem ersten Abschnitt additiv auf das Hüllelement aufgebracht wird, lassen sich nahezu beliebige Geometrien in der Stützstruktur verwirklichen.

In einem zweiten Abschnitt ist die Stützstruktur von wenigstens einem vorgefertigten Stützelement gebildet. Das Stützelement wird vorzugsweise vollständig vorgefertigt, bevor dieses auf dem Hüllelement angeordnet wird. Das Stützelement kann insbesondere aus Blech vorgefertigt sein. Bevorzugt wird das Blech für das Stützelement mit Hilfe eines Lasers zugeschnitten und durch Abkanten in die vorgesehene Form gebracht. Das ergänzend zum 3-D-Druck verwendete Stützelement ermöglicht insbesondere, Bereiche des Hüllelementes, die insbesondere aus fertigungstechnischen Gründen nicht durch einen 3-D-Druck mit der Stützstruktur verbunden werden können, an den Kraftfluss der Stützstruktur anzuschließen.

Ein von einem Blech gebildetes Stützelement ist gemäß einer bevorzugten Ausführungsform der Erfindung aus Blech gebildet, insbesondere gebogen und/oder geschweißt. Das Hüllelement weist vorzugsweise eine Aufnahme für das Stützelement auf, in die das Stützelement bei Herstellung des Wagenkastenelementes eingesetzt wird. Dabei bildet das Stützelement erfindungsgemäß eine Verbindung zwischen einem ersten Abschnitt der Stützstruktur und dem Hüllelement, insbesondere zwischen einem peripheren Abschnitt des Hüllelementes und dem ersten Abschnitt der Stützstruktur und/oder zwischen einem Rahmenprofil und dem ersten Abschnitt der Stützstruktur und/oder zwischen einem in das Hüllelement integrierten Längsprofil und dem ersten Abschnitt der Stützstruktur.

Gemäß einer bevorzugten Variante des erfindungsgemäßen Wagenkastenelementes ist der erste, im 3-D-Druckverfahren erstellte Abschnitt mit dem zweiten Abschnitt stoffschlüssig verbunden, insbesondere verschweißt. In einer weiteren erfindungsgemäßen Variante ist alternativ oder zusätzlich der zweite Abschnitt mit dem Hüllelement stoffschlüssig verbunden. Die stoffschlüssige Verbindung ist dabei bevorzugt von einer Schweißverbindung gebildet.

Bevorzugt ist die Stützstruktur an wenigstens einer Anschlussschnittstelle von einem zweiten Abschnitt gebildet. Insbesondere ist die Anschlussschnittstelle von wenigstens einem Blech, insbesondere einem lasergeschnittenen und/oder gekanteten Blech, gebildet. Die Anschlussschnittstelle dient dabei dem Anschluss des Wagenkastenelementes an benachbarte Bereiche eines Wagenkastens.

In einer weiteren bevorzugten Ausgestaltung der Erfindung bildet der zweite Abschnitt einen Anschlussbereich zum Verbinden der Stützstruktur mit dem Hüllelement oder einem Rahmenprofil. Somit lassen sich Anschlüsse der Stützstruktur an komplexe Geometrien des Hüllelementes oder des Rahmenprofils erstellen, die durch das 3-D-Druckverfahren nicht erreichbar sind. Das Stützelement kann auf das Hüllelement aufgesetzt und/oder in Einbuchtungen und/ oder Vertiefungen und/oder Hinterschneidungen des Hüllelementes eingesetzt werden.

Der zweite Abschnitt kann als Hohlprofil gestaltet sein. Es können Aussparungen vorgesehen sein, z.B. lasergeschnittene Aussparungen, um das Gewicht des zweiten Abschnittes zu optimieren, eine Drainage zu realisieren und/oder Korrosionsschutzmittel und Wärme- / Schallisolierung im Hohlraum zu applizieren. Durch Zuschneiden und Abkanten kann eine Fachwerkstruktur gebildet werden, die bei geringem Gewicht eine hohe Festigkeit ermöglicht.

Das Hüllelement kann bevorzugt Flächen- bzw. plattenförmig ausgestaltet sein. Der erste Abschnitt der Stützstruktur ist mit einem 3-D Druckverfahren auf das Hüllelement aufgedruckt. Das Hüllelement bildet somit die Basis für den Aufbau der Stützstruktur. Insbesondere kann die Stützstruktur somit in einem Arbeitsschritt stoffschlüssig mit dem Hüllelement verbunden sein.

Beispielsweise kann das Hüllelement von einer Metalllegierung, insbesondere einer Stahllegierung gebildet sein. Entsprechend kann die Stützstruktur von einer Metalllegierung gebildet sein.

Die Stützstruktur weist vorzugsweise wenigstens ein Stützstrukturprofil auf. Das Stützstrukturprofil kann mit einem veränderlichen Profilquerschnitt versehen sein. Der Profilquerschnitt kann an die jeweils lokal auftretenden Belastungen angepasst sein, um ein bestmögliches Verhältnis zwischen Materialaufwand und Festigkeit zu erreichen.

In einer bevorzugten Variante der Erfindung weist die Stützstruktur bzw. das Stützstrukturprofil wenigstens einen Gurt und wenigstens einen zwischen Gurt und Hüllelement angeordneten Steg auf. Der Steg bildet eine kraftübertragende Verbindung zwischen Gurt und Hüllelement. Während der Gurt bevorzugt einen Großteil der auf den Wagenkasten wirkenden Lasten trägt bzw. einen Großteil des bei Belastungen des Wagenkastens entstehenden Kraftflusses leitet, wird ein Teil der auf den Gurt wirkenden Lasten über den Steg auf das Hüllelement übertragen, das somit eine stützende Funktion innehat.

In einer vorteilhaften Ausgestaltung der Erfindung sind der wenigstens eine Gurt und der wenigstens eine Steg mittels additiver Fertigung auf das Hüllelement aufgebracht. Somit kann in einem Arbeitsschritt zunächst der Steg auf das Hüllelement aufgebracht, d. h. "aufgedruckt" werden, und unmittelbar im Anschluss der Gurt auf den Steg gefertigt werden.

Die Stützstruktur weist gemäß einer Ausführung der Erfindung an das Hüllelement angrenzende Öffnungen auf. Die Öffnungen sind bei einer einen Gurt und einen Steg aufweisenden Stützstruktur bevozugt im Steg vorgesehen.

Der wenigstens eine Steg der Stützstruktur weist bevorzugt eine Breite und/oder Dicke von nicht mehr als 2 mm, vorzugsweise von nicht mehr als 1,5 mm, äußerst vorzugsweise von nicht mehr als 1 mm auf. Die Breite und/oder Dicke und Höhe des Steges kann dabei entlang der Längserstreckung des Steges variieren. Der Steg kann Hohlräume und/oder Ausschnitte aufweisen, wobei angrenzend an die Hohlräume und/oder Ausschnitte die Breite und/oder Dicke verringert ist.

Der wenigstens eine Gurt der Stützstruktur weist bevorzugt eine Breite und/oder Dicke auf, die ein vielfaches der Breite und/oder Dicke des Steges beträgt. Insbesondere kann der Gurt eine Breite und/oder Dicke von etwa 2 bis 3 mm aufweisen.

Idealerweise sind der wenigstens eine Gurt und der wenigstens eine Steg von einem gemeinsamen, einteiligen Körper gebildet bzw. einteilig gefertigt. Dabei können Gurt und Steg bevorzugt aus einem homogenen Material gefertigt sein, wodurch nahezu beliebige Geometrien möglich sind, welche die vorrangigen Funktionen des Gurtes, nämlich der Kraftleitung, und die vorrangigen Funktionen des Steges, nämlich der Anordnung des Hüllmoduls an dem Gurt, optimal unterstützen. Der Gurt und der Steg können in einem Arbeitsgang additiv gefertigt sein. Gefügeveränderungen zwischen Gurt und Steg, die zu einer Verringerung der Festigkeit führen können, werden auf diese Weise vermieden.

Um einen optimalen Kraftverlauf in dem Steg und in dem Hüllelement bzw. eine optimale Kraftübertragung zwischen Steg und Hüllelement zu erreichen, kann der Gurt gemeinsam mit dem Steg Querschnitte wie z.B. ein Haus-förmiges (zwei parallel zueinander verlaufende Seitenwände mit einem auf den Seitenwänden angeordnetem, spitz zulaufendem Dach), HYförmiges oder I-förmiges Profil bilden. In einer weiteren bevorzugten Variante bildet der Gurt ein offenes und/oder geschlossenes Hohlprofil. Die Querschnitte können variabel ausgestaltet sein, um bei gleicher Masse höhere Biegemomente aufnehmen zu können.

Das von Steg und/oder Gurt gebildete Hohlprofil weist gemäß einer zweckmäßigen Weiterbildung der Erfindung an das Hüllelement angrenzende Öffnungen auf. Die Öffnungen können Durchbrüche bzw. Hohlräume zwischen Steg und Hüllelement bilden. Die Öffnungen können alternativ als Unterbrechung des Steges ausgestaltet sein.

Durch die Öffnungen wird der Wärmeeintrag und damit der Verzug des Hüllelementes während des Aufbringens des Steges und des Gurtes verringert. Des Weiteren bieten die Öffnungen eine einfache Möglichkeit einer Drainage, so dass zum Beispiel durch Kondensation auftretendes Wasser abfließen kann und die Wahrscheinlichkeit einer Korrosion verringert wird. Die Öffnungen ermöglichen weiterhin die Innenbeschichtung der Hohlstruktur mit Korrosionsschutzmittel und/oder die Implementierung einer Wärme- oder Schall-Isolierung. Der Abstand zwischen zwei Öffnungen beträgt z.B. 30 mm, vergleichbar mit einer geschweißten Schrittnaht.

In einer weiteren vorteilhaften Ausgestaltung der Erfindung verlaufen der Gurt und der Steg im Wesentlichen entlang eines in Betrieb des Schienenfahrzeuges auftretenden Lastpfades. Der Wagenkasten eines Schienenfahrzeuges wird während des Betriebes des Schienenfahrzeuges mit Lasten beaufschlagt, die sich in der Wand des Wagenkastens entlang von Lastpfaden konzentrieren. Diese Lastpfade können beispielsweise mittels einer computerunterstützten Berechnung oder Simulation ermittelt werden, insbesondere mit Hilfe der Finite-Elemente-Methode. Wird nun der Verlauf der Stützstruktur an den Verlauf der ermittelten Lastpfade angeglichen, kann bei gleichzeitig geringerem Gewicht eine erhöhte Steifigkeit des Wagenkastens erreicht werden.

Idealerweise deckt die Stützstruktur einen Großteil möglicher, auf den Wagenkasten wirkender Lastpfade ab. Die Stützstruktur kann dazu eine Vielzahl von Stegen und Gurten aufweisen, die im Wesentlichen entlang der ermittelten Lastpfade verlaufen und gemeinsam auf das Hüllelement mittels additiver Fertigung aufgebracht sind. Die Stege und Gurte eines Wagenkastenelementes können ineinander übergehen. Um das Wagenkastenelement kraftübertragend mit einem benachbarten Wagenkastenelement oder anderen tragenden Strukturen eines Wagenkastens verbinden zu können, können die Gurte bis an den Rand eines Wagenkastenelementes verlaufen. Am Rand des Wagenkastenelementes können die Gurte Befestigungs- und/oder Kraftübertragungsschnittstellen bilden. Die Befestigungs- und/oder Kraftübertragungsschnittstellen können beispielsweise von Kontaktflächen gebildet sein, die im montierten Zustand des Wagenkastens auf Kontaktflächen benachbarter Elemente des Wagenkastens aufliegen oder mit diesen verschweißt werden.

Die Stützstruktur kann bevorzugt über ihre Länge bzw. seine Breite eine inhomogene Materialverteilung aufweisen, um auftretenden Lasten gerecht zu werden. Das Material und/oder die Masse der Stützstruktur kann an Stellen konzentriert sein, an welchen im Betrieb erhöhte Lasten auftreten.

Wenigstens ein Steg und/oder Gurt der Stützstruktur kann einen bogenförmigen Verlauf aufweisen. Zusätzlich kann der wenigstens eine Steg und/oder Gurt wenigstens einen geradlinig verlaufenden Abschnitt aufweisen.

Die Stützstruktur bedeckt gemäß einer bevorzugten Variante der Erfindung nur einen Bruchteil der Innenfläche des Hüllmoduls. Vorzugsweise bedeckt die Stützstruktur weniger als 30 % der Innenfläche des Hüllmoduls, oder weniger als 20 % der Innenfläche, äußerst vorzugsweise weniger als 10 % der Innenfläche des Hüllmoduls. Auf diese Weise kann mehr Raum für Ausschnitte und/oder Installationen geschaffen werden.

Für eine optimale Kraftübertragung und Steifigkeit des Wagenkastenelementes kann die Höhe und/oder Breite und/oder Dicke des Gurtes und/oder Steges entlang der Längserstreckung der Stützstruktur variieren. Somit kann der Verlauf des Steges entsprechend dem Verlauf der Lastpfade optimiert bzw. an diesen angeglichen werden, so dass eine möglichst direkte Kraftleitung durch den Steg ermöglicht ist. Idealerweise folgt der wenigstens eine Gurt einem Lastpfad, entlang welchem sich im Betrieb des Schienenfahrzeuges der Kraftfluss konzentriert.

Das Wagenkastenelement weist gemäß einer weiteren Variante der Erfindung einen Ausschnitt auf. Der Ausschnitt kann zum Einbau eines Fensters oder einer Tür vorgesehen sein. Der Ausschnitt kann im Wesentlichen rechteckig gestaltet sein. Die Stützstruktur oder der wenigstens eine Steg grenzt idealerweise an die Ecken des rechteckigen Ausschnittes an. Auf diese Weise werden die Lasten, die sich im Betrieb auf die Ecken des Ausschnittes konzentrieren, durch den Steg abgeleitet.

Der Ausschnitt ist vorzugsweise randseitig von einem Rahmenprofil begrenzt. Das Rahmenprofil kann einen Tür- oder Fensterrahmen bilden. Auf den Ausschnitt über die Hülle des Wagenkastens wirkende Kräfte können durch das Rahmenprofil aufgenommen und abgeleitet werden. Idealerweise grenzt dazu die Stützstruktur, insbesondere der wenigstens eine Gurt, an das Rahmenprofil an. Das Rahmenprofil grenzt also bevorzugt wenigstens abschnittsweise kraftübertragend an das Stützprofil und insbesondere den wenigstens einen Gurt an und/oder der Gurt ist kraftübertragend mit dem Rahmenprofil verbunden.

Das erfindungsgemäße Wagenkastenelement bildet in einer weiteren zweckmäßigen Ausgestaltung der Erfindung ein Wagenkastenmodul mit standardisierten Schnittstellen. Die Schnittstellen des Wagenkastenmoduls können zur Übertragung von Kräften von einem oder von mehreren Gurten und/oder Stegen und/oder Hüllelementen gebildet sein. Zum Aufbau eines Wagenkastens werden die Wagenkastenelemente bevorzugt an ihren Schnittstellen miteinander verschweißt.

Ein erfindungsgemäßer Wagenkasten weist wenigstens ein Wagenkastenelement mit den oben beschriebenen Merkmalen auf. Entsprechende Wagenkastenelemente können Seitenwände, Endwände, Dächer und Böden bilden.

Gemäß einem erfindungsgemäßen Verfahren zur Herstellung eines Wagenkastens für ein Schienenfahrzeug sind die folgenden Schritte vorgesehen:

Zunächst wird ein Hüllelement bereitgestellt. Anschließend wird wenigstens ein Steg auf das Hüllelement aufgebracht. Das Aufbringen des Steges erfolgt bevorzugt durch additive Fertigung. Idealerweise wird der Steg stoffschlüssig mit dem Hüllelement verbunden. Dazu kann für den Steg ein Material verwendet werden, dass dem Material des Hüllelementes gleicht oder entspricht.

Der Steg kann mit Öffnungen gefertigt werden, indem auf voneinander beabstandeten Flächen des Hüllelementes mit der Fertigung des Steges begonnen wird. Anschließend kann ein die Öffnungen überbrückender Gurt auf dem Steg gefertigt werden.

Im Anschluss an die Fertigung des Steges erfolgt die Fertigung des wenigstens einen Gurtes. Der Gurt wird auf die Stege aufgebracht, beabstandet von dem Hüllelement.

Um eine optimale Lastenverteilung auf dem Hüllelement zu erreichen, kann eine Vielzahl von Gurten und Stegen gleichzeitig durch additive Fertigung auf dem Hüllelement aufgebracht werden.

Die additive Fertigung des Steges und/oder des Gurtes erfolgt bevorzugt durch Laser-Pulver-Auftragsschweißen oder Laser-Schweißdraht-Auftragsschweißen.

Für eine optimale Lastenverteilung auf dem Hüllelement kann in einer weiteren Variante des erfindungsgemäßen Verfahrens zunächst eine Berechnung der Lastpfade, bevorzugt innerhalb eines vordefinierten Bauraumes, auf einem vordefinierten Hüllelement erfolgen. Idealerweise kann eine computerunterstützte Topologieoptimierung erfolgen, wobei anschließend der Verlauf der Gurte und Stege entsprechend der ermittelten optimalen Topologie gestaltet wird. Es wird zunächst eine computerunterstützte Topologieoptimierung durchgeführt. Anschließend werden die Gurte und Stege bevorzugt fertigungsgerecht konstruiert und/oder mit einem Verlauf gefertigt, der im Wesentlichen der durch die Topologieoptimierung ermittelten optimalen Formgebung entspricht.

Weil bei einer additiven Fertigung der Gurte und Stege auch veränderliche Querschnitte und bogenförmige Verläufe möglich sind, kann die Geometrie der Gurte und Stege entsprechend der ermittelten Lastpfade veränderlich gestaltet werden. Entsprechend wird gemäß einem weiteren bevorzugten Verfahrensschritt die Form des Querschnittes, die Höhe, die Breite und/oder die Länge der Gurte und Stege entsprechend der Ergebnisse einer zuvor berechneten Topologie- und/oder Materialdickenoptimierung gewählt.

In einem erfindungsgemäßen Verfahren zur Topologieoptimierung wird die Grundgestalt der Stützstruktur computerunterstützt entworfen. Bevorzugt wird die Topologie (Grundgestalt) mittels der Finite-Elemente-Methode (FEM) computerunterstützt bestimmt. Der Bauraum für die Stützstruktur wird einerseits durch das Hüllelement nach außen und andererseits durch den maximal zur Verfügung stehenden Bauraum für die Stützstruktur bzw. den Passagier-Innenraum nach innen definiert. Insbesondere wird der für die Definition der Stützstruktur definierte Bauraum durch das Hüllelement begrenzt. Die Geometrie des Hüllelementes wird bevorzugt vor Beginn der Topologieoptimierung definiert, wobei der Bauraum der Stützstruktur einseitig an dem Hüllelement beginnt.

Die in Richtung eines Endes des Wagenkastenelementes verlaufenden Gurte und Stege grenzen bevorzugt an das Ende des Hüllelementes an. Die Enden der Gurte und Stege können kraftübertragende Anschlussschnittstellen für den Einbau des Wagenkastenelementes in einen Wagenkasten bilden. Die Anschlussschnittstellen liegen somit auf den Lastpfaden. Indem zwei Wagenkastenelemente an den Anschlussschnittstellen miteinander verbindbar sind, z.B. durch Schweißen, kann über benachbarte Stützstrukturmodule ein durchgängiger Kraftfluss erreicht werden. Die Stützstrukturmodule zweier benachbarter Wagenkastenelemente können die auf die Wagenkastenelemente wirkenden Lasten idealerweise im Wesentlichen vollständig ableiten.

Die Anschlussschnittstellen können beispielsweise von Schweißflächen gebildet sein, an welchen aneinander angrenzende Stützstrukturmodule miteinander verschweißbar und/oder tragende Profile anschließbar sind.

Der Gurt und/oder der Steg ist im Bereich der Anschlussschnittstelle bevorzugt verbreitert, um eine hohe Kraftübertragung bei geringer Spannung zu ermöglichen.

Das Wagenkastenelement wird gemäß einer weiteren Variante des Verfahrens mit einem Ausschnitt entworfen. Der Ausschnitt kann zum Einbau eines Fensters oder einer Tür vorgesehen sein. Der Ausschnitt wird bevorzugt von einem Rahmenprofil umgeben. Der für die Definition der Stützstruktur definierte Bauraum wird anschließend idealerweise wenigstens abschnittsweise durch das Rahmenprofil begrenzt. Dabei kann der Bauraum das Rahmenprofil umgeben. Die Geometrie des Rahmenprofils wird dazu bevorzugt vor Beginn der Topologieoptimierung definiert. Der Bauraum der Stützstruktur beginnt bevorzugt an dem Rahmenprofil. Entsprechend kann die Stützstruktur an dem Rahmenprofil beginnen.

Durch das topologieoptimierte Design und die entsprechende additive Fertigung der Stützstruktur können die Bauteilkosten eines erfindungsgemäßen Wagenkastenelementes um etwa 40 % reduziert werden. Des Weiteren ist eine Gewichtseinsparung von etwa 15 % bezogen auf die additiv gefertigte Struktur möglich.

Die beiliegenden Zeichnungen veranschaulichen erfindungsgemäße Ausführungsformen und dienen zusammen mit der Beschreibung der Erläuterung der Prinzipien der Erfindung, ohne darauf beschränkt zu sein. Es zeigen:
Fig. 1 eine Ausführungsform eines erfindungsgemäßen Wagenkastenelementes für einen Wagenkasten eines Schienenfahrzeuges;
Fig. 2 einen ersten vergrößerten Ausschnitt der Ausführungsform der Fig. 1;
Fig. 3 einen zweiten vergrößerten Ausschnitt der Ausführungsform der Fig. 1;
Fig. 4 einen dritten vergrößerten Ausschnitt der Ausführungsform der Fig. 1.

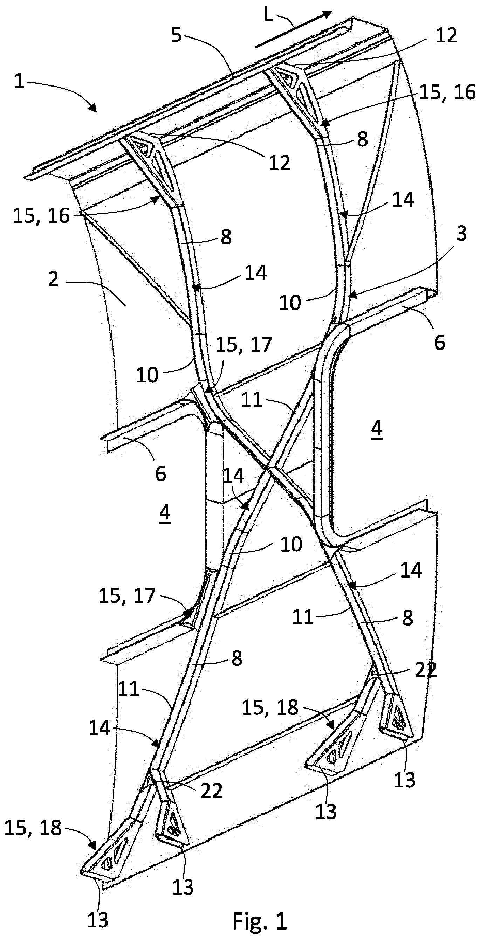

Im Folgenden wird unter Bezugnahme auf die Figuren 1 bis 4 ein bevorzugtes Ausführungsbeispiel eines erfindungsgemäßen Wagenkastenelementes beschrieben.

Fig. 1 zeigt ein erfindungsgemäßes Wagenkastenelement 1. Das Wagenkastenelement 1 weist ein Hüllelement 2 auf, das mit einer Stützstruktur 3 versehen ist. In dem Wagenkastenelement 1 sind zwei Ausschnitte 4 eingebracht, die dem Einbau von Fenstern dienen.

Das Hüllelement 2 ist im Wesentlichen aus flächen- oder plattenförmigen Blechen gefertigt. Das Hüllelement 2 bildet die Außenfläche eines Wagenkastens bzw. Schienenfahrzeuges und sorgt im Wesentlichen für die räumliche Trennung zwischen Innenraum und Umwelt. Für eine optimale Ausnutzung des auf einer Bahnstrecke verfügbaren Lichtraumprofils, d.h. für ein maximales Passagierraumvolumen ist das Hüllelement 2 zur Außenseite hin gewölbt. Die Stützstruktur 3 ist also auf einer konkav gewölbten Fläche des Hüllelementes 2 aufgebracht.

Die Stützstruktur 3 ist größtenteils, in ersten Abschnitten 14, über additive Fertigung auf die Innenfläche des Hüllelementes 2 aufgebracht und stoffschlüssig mit diesem verbunden. In Bereichen, in denen aufgrund größerer Belastungen und/oder komplexer Geometrien des Hüllelementes 2 eine allein auf additiver Fertigung basierende Struktur nicht die gewünschten Eigenschaften oder Möglichkeiten bietet, ist die Stützstruktur 3, in zweiten Abschnitten 15, vorgefertigt und anschließend mit den ersten Abschnitten 14 und dem Hüllelement 2 verschweißt.

Die zweiten Abschnitte 15 umfassen Stützelemente 16, 17, 18, die nicht im 3D-DruckVerfahren hergestellt, sondern von Blechen - bevorzugt aus lasergeschnittenen, abgekanteten Blechen - gebildet sind. Die Bleche werden ausgeschnitten, vorzugsweise mit Laser, anschließend gebogen, bevorzugt durch Abkanten, und schließlich mit dem benachbarten ersten Abschnitt 14 sowie dem Hüllelement 2 verschweißt.

An seinem oberen Ende umfasst das Hüllelement 2 ein in Längsrichtung L verlaufendes Längsprofil 5, das das Wagenkastenelement 1 verstärkt und einen Übergang zum hier nicht gezeigten Dach des Wagenkastens bildet. Das Längsprofil 5 kann einen Längsträger eines Wagenkastens bilden. Die Stützstruktur 3 erstreckt sich bis auf das Längsprofil 5.

Die Ausschnitte 4 sind von Rahmenprofilen 6 umgeben. Die Rahmenprofile 6 stützen die Ausschnitte 4 an ihren Rändern. Die Rahmenprofile 6 bilden Fensterrahmen zur Aufnahme von Fensterdichtungen und -scheiben. Die Rahmenprofile 6 werden wiederum von der Stützstruktur 3 gestützt. Dazu grenzt die Stützstruktur 3 an die Rahmenprofile 6 an. Die Rahmenprofile 6 sind bevorzugt aus Halbzeugen gefertigt, und mit dem Hüllelement 2 verschweißt, um eine möglichst genau fertigbare Schnittstelle für einzubauende Fenster zu erreichen.

Für die Verbindung mit einem Rahmenprofil 6 ist jeweils ein von einem lasergeschnittenen, abgekantetem Blech gebildeter zweiter Abschnitt 15 vorgesehen.

Die Stege 7 und/oder Gurte 8 können einen bogenförmigen Verlauf aufweisen, der im Wesentlichen dem bogenförmigen Verlauf eines im Betrieb auftretenden Lastpfades entspricht. In dem Ausführungsbeispiel der Fig. 1 sind bogenförmige Gurtabschnitte 10 vorgesehen, die eine optimierte Kraftleitung ermöglichen. Des Weiteren sind geradlinig verlaufende Gurtabschnitte 11 vorhanden. Die Mehrzahl der geradlinigen Gurtabschnitte 11 verläuft im Wesentlichen schräg zur Längsrichtung L und bildet somit ein ausgesteiftes Schubfeld. Damit dienen die geradlinigen Gurtabschnitte 11 insbesondere dazu, die Verwindungssteifigkeit des Wagenkastens zu erhöhen.

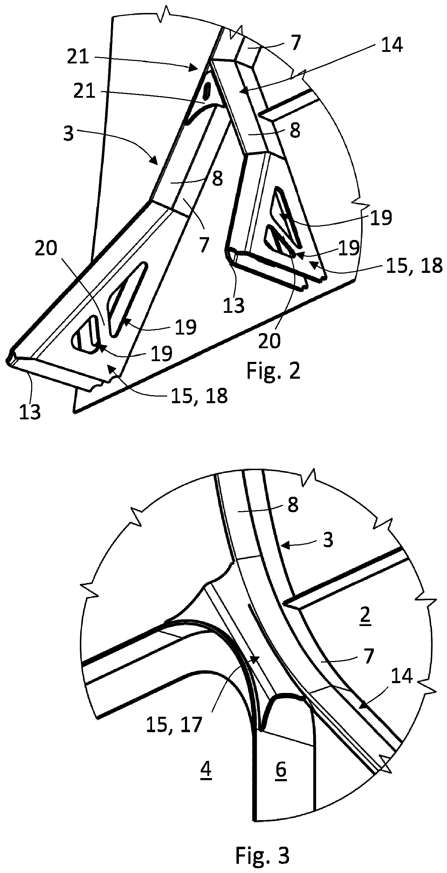

Fig. 2 ist ein vergrößerter Ausschnitt des unteren Endes des Wagenkastenelementes der Fig. 1. Die Stützstruktur 3 umfasst Stege 7 und Gurte 8. Die Stege 7 sind unmittelbar auf das Hüllelement 2 aufgebracht.

Im Bodenbereich grenzen die Gurte 8 und Stege 7 an das Ende des Hüllelementes 2 an, wobei hier kraftübertragende Anschlussschnittstellen 13 zur Verbindung mit einem Wagenkastenboden vorgesehen sind. Die Anschlussschnittstellen 13 sind von Stützelementen 18 gebildet. Die Stützelemente 18 sind als Hohlprofil ausgestaltet. Aussparungen 19 dienen dazu, das Gewicht der Stützstruktur 3 insgesamt zu verringern, Drainage zu realisieren und ggf. Korrosionsschutzmittel und Wärme- / Schallisolierung im Hohlraum zu applizieren. Zwischen den Aussparungen 19 sind Streben 20 vorgesehen, die eine fachwerkartige Struktur bilden und somit eine gewichtsoptimierte Versteifung des Stützelementes 18 bewirken.

Der erste Abschnitt 14 der Stützstruktur 3 zweigt sich in zwei Äste auf, die eine Gabelung 21 bilden. Auf der Gabelung ist ein als Stützblech ausgestaltetes Stützelement 22 aufgeschweißt, dass die beiden Äste der Gabelung 21 gegeneinander abstützt und gleichzeitig die Funktion einer Befestigungsschnittstelle für Schienen zur Passagier-Sitzbefestigung erfüllt.

Fig. 3 zeigt einen vergrößerten Ausschnitt des Wagenkastenelements 1 an einem Ausschnitt 4. Das Rahmenprofil 6 zur Aufnahme eines Fensters ist stoffschlüssig mit der Stützstruktur 3 verbunden. Dazu ist ein erster Abschnitt 14 der Stützstruktur 3, der mit einem 3D-Druckverfahren auf das Hüllelement 2 aufgedruckt ist, über einen zweiten Abschnitt 15 der Stützstruktur 3, stoffschlüssig verbunden. Der zweite Abschnitt 15 ist von einem Stützelement 17 gebildet, das aus einem Blech geformt ist.

Das Stützelement 17 erstreckt sich brückenartig von dem ersten Abschnitt 14 der Stützstruktur 3 zu dem Rahmenprofil 6. Dabei verläuft das Stützelement 17 im Wesentlichen parallel zum Hüllelement 2.

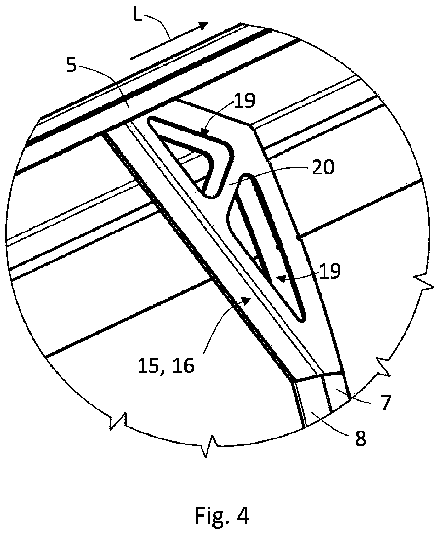

Fig. 4 ist ein weiterer vergrößerter Ausschnitt des Wagenkastenelementes 1 im Dachbereich. Das Längsprofil 5 wölbt sich nach innen über benachbarte Bereiche des Hüllelements 2. Wird die im 3D-Druckverfahren, insbesondere durch Auftragsschweißen hergestellte Stützstruktur 3 in einer Richtung auf das Hüllelement 2 aufgebracht, die im Wesentlichen senkrecht zu den großflächigen Bereichen des Hüllelementes 2 verläuft, bildet das Längsprofil daher ein Hindernis für die Schweißvorrichtung.

Die Verwendung eines separat hergestellten Stützelementes 16 ermöglicht, dass dieses z.B. quer zur 3D-Druckrichtung in das Hüllelement 2 eingefügt und mit weiteren Abschnitten der Stützstruktur 3 verschweißt werden kann. Hinterschneidungen bzw. Hohlräume, wie der durch das Längsprofil 5 gebildete Hohlraum, können somit mit der Stützstruktur 3 verbunden werden.

Das Stützelement 16 ist wie das in Fig. 2 gezeigte Stützelement 18 mit Aussparungen 19 versehen, die von Streben 20 überbrückt sind. Die resultierende Fachwerkstruktur ermöglicht auch hier einen gewichtssparenden, hochfesten Aufbau, kombiniert mit der Möglichkeit für eine innere Korrosionsschutzbeschichtung und der Implementierung von Wärme- / Schallisolierung.

### Bezugszeichenliste

- 1: Wagenkastenelement
- 2: Hüllelement
- 3: Stützstruktur
- 4: Ausschnitt
- 5: Längsprofil
- 6: Rahmenprofil
- 7: Steg
- 8: Gurt
- 9: Öffnung
- 10: Bogenförmiger Gurtabschnitt
- 11: Geradliniger Gurtabschnitt
- 12: Anschlussschnittstelle (Seite)
- 13: Anschlussschnittstelle (Boden)
- 14: Erster Abschnitt
- 15: Zweiter Abschnitt
- 16, 17, 18: Stützelement
- 19: Aussparung
- 20: Strebe
- 21: Gabelung
- 22: Stützelement

## Patentansprüche

1. Wagenkastenelement (1) für den Wagenkasten eines Schienenfahrzeuges, mit einer Stützstruktur (3), einem Rahmenprofil (6) und wenigstens einem Hüllelement (2), wobei die Stützstruktur (3) in einem ersten Abschnitt (14) mit einem 3-D-Druckverfahren auf das Hüllelement (2) aufgedruckt ist und in einem zweiten Abschnitt (15) von wenigstens einem vorgefertigten Stützelement (16, 17, 18, 22) gebildet ist, wobei das wenigstens eine vorgefertigte Stützelement (16, 17, 18, 22) eine Verbindung zwischen dem ersten Abschnitt (14) der Stützstruktur (3) und dem Hüllelement (2) und/oder zwischen dem Rahmenprofil (6) und dem ersten Abschnitt (14) der Stützstruktur (3) und/oder zwischen einem in das Hüllelement (3) integrierten Längsprofil und dem ersten Abschnitt (14) der Stützstruktur (3) bildet.

2. Wagenkastenelement (1) nach Anspruch 1, wobei der erste Abschnitt (14) ein peripherer Abschnitt des Hüllelementes (2) ist und/oder wobei der erste Abschnitt (14) mit dem zweiten Abschnitt (15) verschweißt ist und/oder der zweite Abschnitt (15) mit dem Hüllelement (2) verschweißt ist.

3. Wagenkastenelement (1), nach einem der obigen Ansprüche, wobei die Stützstruktur (3) an wenigstens einer Anschlussschnittstelle (12, 13) von wenigstens einem Blech, insbesondere einem lasergeschnittenen und/oder gekanteten Blech, gebildet ist.

4. Wagenkastenelement (1), nach einem der obigen Ansprüche, wobei der zweite Abschnitt (15) einen Anschlussbereich zum Verbinden der Stützstruktur mit dem Hüllelement (2) und oder dem Rahmenprofil (6) bildet.

5. Wagenkastenelement (1) nach einem der obigen Ansprüche, wobei die Stützstruktur (3) an das Hüllelement (2) angrenzende Öffnungen (9) aufweist.

6. Wagenkastenelement (1) nach einem der obigen Ansprüche, wobei sich die Stützstruktur (3), insbesondere der erste Abschnitt (14) der Stützstruktur (3), im Wesentlichen entlang eines im Betrieb des Schienenfahrzeuges auftretenden Lastpfades erstreckt.

7. Wagenkastenelement (1) nach einem der obigen Ansprüche, wobei die Stützstruktur (3) den Großteil möglicher, auf den Wagenkasten wirkender Lastpfade abdeckt.

8. Wagenkastenelement (1) nach einem der obigen Ansprüche, wobei die Stützstruktur (3) wenigstens einen Gurt (8) und wenigstens einen zwischen Gurt (8) und Hüllelement (2) angeordneten Steg (7) umfasst.

9. Wagenkastenelement (1) nach Anspruch 8, wobei die Höhe und/oder Breite des Gurtes (8) und/oder Steges (7) entlang der Längserstreckung der Stützstruktur (3) variieren.

10. Wagenkastenelement (1) nach einem der Ansprüche 8 oder 9, wobei der wenigstens eine Gurt (8) einem Lastpfad folgt, entlang welchem sich im Betrieb des Schienenfahrzeuges der Kraftfluss konzentriert.

11. Wagenkastenelement (1) nach Anspruch 10, wobei der Gurt (8) gemeinsam mit dem Steg (7) ein Haus-, HY- oder I-förmiges Profil bildet.

12. Wagenkastenelement (1) nach einem der obigen Ansprüche, wobei das Wagenkastenelement (1) einen Ausschnitt (4) aufweist und der Ausschnitt (4) randseitig von dem Rahmenprofil (6) begrenzt wird, wobei das Rahmenprofil (6) wenigstens abschnittsweise kraftübertragend an die Stützstruktur (3) angrenzt und/oder kraftübertragend mit der Stützstruktur (3) verbunden ist.

13. Wagenkasten für ein Schienenfahrzeug, **gekennzeichnet durch** eine Vielzahl von Wagenkastenelementen (1) nach einem der Ansprüche 1 bis 12.

14. Verfahren zur Herstellung eines Wagenkastenelementes nach einem der Ansprüche 1 bis 12, aufweisend die Schritte:
a. Herstellen eines Hüllelementes (2) und eines Rahmenprofils (6),
b. Herstellen eines Stützelementes (16, 17, 18, 22), insbesondere aus einem Blech,
c. additive Fertigung einer Stützstruktur (3) auf dem Hüllelement (2),
d. Verschweißen des Stützelementes (16, 17, 18, 22) mit der Stützstruktur (3) und/oder dem Hüllelement (2),
so, dass das Stützelement (16, 17, 18, 22) eine Verbindung zwischen dem ersten Abschnitt (14) der Stützstruktur (3) und dem Hüllelement (2) und/oder zwischen dem Rahmenprofil (6) und einem ersten Abschnitt (14) der Stützstruktur (3) und/oder zwischen einem in das Hüllelement (3) integrierten Längsprofil und dem ersten Abschnitt (14) der Stützstruktur (3) bildet.

15. Verfahren nach Anspruch 14, **gekennzeichnet durch** die zusätzlichen Schritte:
a. Durchführung einer computerunterstützten Topologieoptimierung, wobei der Bauraum durch das Hüllelement definiert ist,
b. anschließend Fertigung einer Stützstruktur (3) mit einer Formgebung, die im Wesentlichen der durch die Topologieoptimierung ermittelten optimalen Formgebung entspricht.

## Claims

1. Car body element (1) for the car body of a rail vehicle, having a support structure (3), a frame profile (6) and at least one covering element (2), wherein the support structure (3) is printed onto the covering element (2) in a first section (14) using a 3D printing process and is formed in a second section (15) by at least one prefabricated support element (16, 17, 18, 22), wherein the at least one prefabricated support element (16, 17, 18, 22) forms a connection between the first section (14) of the support structure (3) and the covering element (2) and/or between the frame profile (6) and the first section (14) of the support structure (3) and/or between a longitudinal profile integrated into the covering element (3) and the first section (14) of the support structure (3).

2. Car body element (1) according to claim 1, wherein the first section (14) is a peripheral section of the covering element (2) and/or wherein the first section (14) is welded to the second section (15) and/or the second section (15) is welded to the covering element (2).

3. Car body element (1), according to one of the preceding claims, wherein the support structure (3) is formed at at least one connection interface (12, 13) by at least one sheet metal, in particular a laser-cut and/or folded sheet metal.

4. Car body element (1), according to one of the preceding claims, wherein the second section (15) forms a connection region for connecting the support structure to the covering element (2) and or the frame profile (6).

5. Car body element (1) according to one of the preceding claims, wherein the support structure (3) has openings (9) adjacent to the covering element (2).

6. Car body element (1) according to one of the preceding claims, wherein the support structure (3), in particular the first section (14) of the support structure (3), extends substantially along a load path occurring during operation of the rail vehicle.

7. Car body element (1) according to one of the preceding claims, wherein the support structure (3) covers the majority of possible load paths acting on the car body.

8. Car body element (1) according to one of the preceding claims, wherein the support structure (3) comprises at least one belt (8) and at least one web (7) arranged between the belt (8) and the casing element (2).

9. Car body element (1) according to claim 8, wherein the height and/or width of the belt (8) and/or web (7) vary along the longitudinal extent of the support structure (3).

10. Car body element (1) according to one of claims 8 or 9, wherein the at least one belt (8) follows a load path along which the force flow is concentrated during operation of the rail vehicle.

11. Car body element (1) according to claim 10, wherein the belt (8) together with the web (7) forms a house-shaped, HY-shaped or I-shaped profile.

12. Car body element (1) according to one of the preceding claims, wherein the car body element (1) has a cut-out (4) and the cut-out (4) is bounded at the edge by the frame profile (6), wherein the frame profile (6) adjoins the support structure (3) in a force-transmitting manner at least in sections and/or is connected to the support structure (3) in a force-transmitting manner.

13. Car body for a rail vehicle, **characterised by** a plurality of car body elements (1) according to one of claims 1 to 12.

14. A method of manufacturing a car body element according to any one of claims 1 to 12, comprising the steps of:
a. manufacturing a shell element (2) and a frame profile (6),
b. manufacturing a support element (16, 17, 18, 22), in particular from a sheet metal,
c. additive manufacturing of a support structure (3) on the covering element (2),
d. welding the support element (16, 17, 18, 22) to the support structure (3) and/or the covering element (2),
such that the support element (16, 17, 18, 22) forms a connection between the first section (14) of the support structure (3) and the covering element (2) and/or between the frame profile (6) and a first section (14) of the support structure (3) and/or between a longitudinal profile integrated into the covering element (3) and the first section (14) of the support structure (3).

15. Method according to claim 14, **characterised by** the additional steps:
a. computer-aided topology optimisation, where the installation space is defined by the covering element,
b. subsequently manufacturing a support structure (3) with a shape that essentially corresponds to the optimum shape determined by the topology optimisation.

## Revendications

1. Élément de caisse de voiture (1) pour la caisse de voiture d'un véhicule ferroviaire, comportant une structure de support (3), un profilé de châssis (6) et au moins un élément d'enveloppe (2), dans lequel la structure de support (3) est, dans une première section (14), imprimée sur l'élément d'enveloppe (2) au moyen d'un procédé d'impression 3D et est formée, dans une deuxième section (15), par au moins un élément de support (16, 17, 18, 22) préfabriqué, dans lequel l'au moins un élément de support (16, 17, 18, 22) préfabriqué forme une liaison entre la première section (14) de la structure de support (3) et l'élément d'enveloppe (2) et/ou entre le profilé de châssis (6) et la première section (14) de la structure de support (3) et/ou entre un profilé longitudinal intégré dans l'élément d'enveloppe (3) et la première section (14) de la structure de support (3).

2. Élément de caisse de voiture (1) selon la revendication 1, dans lequel la première section (14) est une section périphérique de l'élément d'enveloppe (2) et/ou dans lequel la première section (14) est soudée à la deuxième section (15) et/ou la deuxième section (15) est soudée à l'élément d'enveloppe (2).

3. Élément de caisse de voiture (1), selon l'une des revendications précédentes, dans lequel la structure de support (3) est formée au niveau d'au moins une interface de raccordement (12, 13) par au moins une tôle, en particulier une tôle découpée au laser et/ou pliée.

4. Élément de caisse de voiture (1), selon l'une des revendications précédentes, dans lequel la deuxième section (15) forme une zone de raccordement permettant de relier la structure de support à l'élément d'enveloppe (2) et/ou au profilé de châssis (6).

5. Élément de caisse de voiture (1) selon l'une des revendications précédentes, dans lequel la structure de support (3) présente des ouvertures (9) adjacentes à l'élément d'enveloppe (2).

6. Élément de caisse de voiture (1) selon l'une des revendications précédentes, dans lequel la structure de support (3), en particulier la première section (14) de la structure de support (3), s'étend sensiblement le long d'un chemin de charge se produisant lors du fonctionnement du véhicule ferroviaire.

7. Élément de caisse de voiture (1) selon l'une des revendications précédentes, dans lequel la structure de support (3) couvre une grande partie des chemins de charge possibles agissant sur la caisse de voiture.

8. Élément de caisse de voiture (1) selon l'une des revendications précédentes, dans lequel la structure de support (3) comprend au moins une sangle (8) et au moins une entretoise (7) disposée entre la sangle (8) et l'élément d'enveloppe (2).

9. Élément de caisse de voiture (1) selon la revendication 8, dans lequel la hauteur et/ou la largeur de la sangle (8) et/ou de l'entretoise (7) varient le long de l'extension longitudinale de la structure de support (3).

10. Élément de caisse de voiture (1) selon l'une des revendications 8 ou 9, dans lequel l'au moins une sangle (8) suit un chemin de charge le long duquel se concentre le flux de force lors du fonctionnement du véhicule ferroviaire.

11. Élément de caisse de voiture (1) selon la revendication 10, dans lequel la sangle (8) forme, conjointement avec l'entretoise (7), un profil en forme de maison, de HY ou de I.

12. Élément de caisse de voiture (1) selon l'une des revendications précédentes, dans lequel l'élément de caisse de voiture (1) présente une découpe (4) et la découpe (4) est délimitée côté bord par le profilé de châssis (6), dans lequel le profilé de châssis (6) est adjacent à la structure de support (3) au moins dans certaines sections de manière à transmettre une force et/ou est relié à la structure de support (3) de manière à transmettre une force.

13. Caisse de voiture pour un véhicule ferroviaire, **caractérisée par** une pluralité d'éléments de caisse de voiture (1) selon l'une des revendications 1 à 12.

14. Procédé pour la production d'un élément de caisse de voiture selon l'une des revendications 1 à 12, présentant les étapes consistant à :
a. produire un élément d'enveloppe (2) et un profilé de châssis (6),
b. produire un élément de support (16, 17, 18, 22), en particulier à partir d'une tôle,
c. fabriquer de manière additive une structure de support (3) sur l'élément d'enveloppe (2),
d. souder l'élément de support (16, 17, 18, 22) à la structure de support (3) et/ou à l'élément d'enveloppe (2),
de sorte que l'élément de support (16, 17, 18, 22) forme une liaison entre la première section (14) de la structure de support (3) et l'élément d'enveloppe (2) et/ou entre le profilé de châssis (6) et une première section (14) de la structure de support (3) et/ou entre un profilé longitudinal intégré dans l'élément d'enveloppe (3) et la première section (14) de la structure de support (3).

15. Procédé selon la revendication 14, **caractérisé par** les étapes supplémentaires consistant à :
a. réaliser une optimisation topologique assistée par ordinateur, dans lequel l'espace de construction est défini par l'élément d'enveloppe,
b. ensuite, fabriquer une structure de support (3) avec une forme qui correspond sensiblement à la forme optimale déterminée par l'optimisation topologique.
